# EUROPEAN PATENT SPECIFICATION

(11) **EP 3 342 790 B1**
(45) Date of publication and mention of the grant of the patent: **04.10.2023**
(21) Application number: 16839036.7
(22) Date of filing: 02.08.2016
(51) Int. Cl.: C08F 214/26, C08F 4/34, C08F 210/02, C08F 214/18

(54) **METHOD FOR PRODUCING FLUORINE-CONTAINING POLYMER**
VERFAHREN ZUR HERSTELLUNG VON FLUORHALTIGEM POLYMER
PROCÉDÉ DE FABRICATION D'UN POLYMÈRE FLUORÉ

(30) Priority: 27.08.2015 JP 2015168150
(43) Date of publication of application: 04.07.2018
(73) Proprietor: AGC Inc., Tokyo 100-8405 (JP)
(72) Inventor: AIDA, Shigeru, Tokyo 100-8405 (JP); YAGI, Keisuke, Tokyo 100-8405 (JP); OTSUGU, Satoshi, Tokyo 100-8405 (JP)
(74) Representative: Müller-Boré & Partner Patentanwälte PartG mbB
(86) International application number: PCT/JP2016/072687
(87) International publication number: WO 2017/033689

(56) References cited:
- EP-A1- 0 673 951
- EP-A1- 2 272 877
- JP-A- H1 025 310
- JP-A- H06 298 863
- JP-A- S54 160 487
- JP-A- S54 160 487
- JP-A- 2002 317 006
- US-A- 5 434 229
- US-A- 5 434 229
- US-A1- 2009 301 752
- YUKI KASANKABUTSU 2015, pages 1-1 - 4-3, XP009509422
- Chester S. Sheppard ET AL: "The selection and use of free radical initiators", POLYMER ENGINEERING AND SCIENCE., vol. 19, no. 9, 1 July 1979 (1979-07-01), pages 597-606, XP055647616, US ISSN: 0032-3888, DOI: 10.1002/pen.760190902

## Description

### TECHNICAL FIELD

The present invention relates to an initiator composition for a fluorinated polymer, which comprises an organic peroxide and a saturated hydrocarbon compound, and a method for producing a fluorinated polymer using it.

### BACKGROUND ART

An organic peroxide is decomposed by heat and readily forms free radicals, and is used as a polymerization initiator for polymerization of a vinyl monomer such as an olefin. However, it involves risk of fire and explosion due to its instability against heat and foreign matters and high sensitivity to friction and impact, and it should be handled with sufficient care. Accordingly, usually, an organic peroxide is used in the form of a composition diluted with a solvent which is inert to the organic peroxide and has no influence over its stability. As such a dilution solvent, a fluorinated organic solvent such as a hydrochlorofluorocarbon (HCFC)-based solvent, or an aliphatic or aromatic hydrocarbon solvent has been known.

In Patent Document 1, for polymerization of a fluorinated polymer excellent in adhesion to a non-fluorinated polymer, a mixed solution of t-butyl peroxypivalate and AK-225cb (1,3-dichloro-1,1,2,2,3-pentafluoropropane) in a mass ratio of 1:1 is used. However, a fluorinated organic solvent such as a chlorofluorocarbon (CFC)-based solvent or a hydrochlorofluorocarbon (HCFC)-based solvent has significant influence over global environment such as ozone destruction, as compared with a hydrocarbon organic solvent. In recent years, the problem of global warming is international concern, and use of specific CFCs and HCFCs which are one of responsible substances has been prohibited.

### PRIOR ART DOCUMENTS

### PATENT DOCUMENTS

Patent Document 1: JP-A-2002-327018

The documents JP 2002 317006, JP H10 25310 and JP S54 160487 represent prior art in the technical field.

### DISCLOSURE OF INVENTION

### TECHNICAL PROBLEM

On the other hand, the present inventors are aware that in polymerization for a fluorinated polymer, if a hydrocarbon organic solvent such as hexane is used as a dilution solvent of an organic peroxide, such a solvent itself functions as a chain transfer agent, whereby a high molecular weight polymer will not be obtained, and the polymerization rate tends to decrease.

The object of the present invention is to provide a polymerization initiator composition for a fluorinated polymer, which will not destruct ozone layer and which has less influence over polymerization of a monomer for a fluorinated polymer. Another object of the present invention to provide a method for producing a fluorinated polymer by which a fluorinated polymer having a sufficient molecular weight can be obtained.

### SOLUTION TO PROBLEM

The present invention provides the following embodiment.
[1] A method for producing a fluorinated polymer by using an initiator composition for a fluorinated polymer wherein the initiator composition for a fluorinated polymer comprises an organic peroxide, and a saturated hydrocarbon compound having at least one tertiary carbon atom or quaternary carbon atom, wherein the saturated hydrocarbon compound has from 6 to 15 carbon atoms, wherein the number of chained methylene groups in the saturated hydrocarbon compound is less than 3, wherein the saturated hydrocarbon compound has a boiling point of from 40 to 250°C, wherein the saturated hydrocarbon compound has a melting point of from -100 to 0°C, wherein the saturated hydrocarbon compound contains no halogen atom, wherein the 10 hour half-life temperature of the organic peroxide is from 10 to 150°C, and wherein the used amount of the organic peroxide is from 0.05 to 0.5 wt% based on all the monomers to be polymerized for producing a fluorinated polymer.
[2] The method for producing a fluorinated polymer according to [1] wherein the fluorinated polymer is an ethylene/tetrafluoroethylene copolymer.
[3] The method for producing a fluorinated polymer according to [1] or [2] wherein the saturated hydrocarbon compound is 2,2,4,6,6-pentamethylheptane.
[4] The method for producing a fluorinated polymer according to anyone of [1] to [3] wherein the organic peroxide is t-butyl peroxypivalate.
[5] The method for producing a fluorinated polymer according to anyone of [1] to [4], wherein polymerization for the fluorinated polymer is solution polymerization or suspension polymerization.
[6] The method for producing a fluorinated polymer according to any one of [1] to [5], which comprises a step of recovering a polymerization solvent and a step of separating the saturated hydrocarbon compound from the recovered polymerization solvent.

### ADVANTAGEOUS EFFECTS OF INVENTION

The initiator composition for a fluorinated polymer used in the method of the present invention will not destroy ozone layer, can reduce environmental burden and has less influence over polymerization for a fluorinated polymer, for example, a decrease of the polymerization rate. According to the method for producing a polymer of the present invention, a fluorinated polymer having a sufficient molecular weight can be obtained.

### DESCRIPTION OF EMBODIMENTS

The saturated hydrocarbon compound used as the solvent of the initiator composition has at least one tertiary carbon atom or quaternary carbon atom. In general, it has been known that if a saturated hydrocarbon compound is present in a polymerization system for a fluorinated polymer, a chain transfer reaction occurs and the molecular weight of the resulting fluorinated polymer will not sufficiently be high. However, when the saturated hydrocarbon compound has at least one tertiary carbon atom or quaternary carbon atom, the chain transfer reaction will hardly occur, and the molecular weight of the fluorinated polymer can be made sufficiently high. Further, the saturated hydrocarbon compound used as the solvent of the initiator composition used in the method of the present invention will not destroy ozone layer and can reduce environmental burden.

In the present invention, a saturated hydrocarbon compound means a saturated hydrocarbon compound having at least one tertiary carbon atom or quaternary carbon atom. The initiator composition means an initiator composition for a fluorinated polymer.

### (Saturated hydrocarbon compound)

The total number of the tertiary carbon atom and the quaternary carbon atom in the saturated hydrocarbon compound is preferably at least 1, more preferably at least 2, further preferably at least 3. The total number of the tertiary carbon atom and the quaternary carbon atom is preferably at most 6, more preferably at most 4. The number of the quaternary carbon atom is preferably at least 1, more preferably at least 2. The number of the quaternary carbon atom is preferably at most 4, more preferably at most 4. When the number of the tertiary carbon atom or the quaternary carbon atom is within the above range, the chain transfer reactivity will be kept sufficiently low, whereby the molecular weight of the fluorinated polymer can be made high, and the boiling point will not be too high.

The number of carbon atoms in the saturated hydrocarbon compound is from 6 to 15, preferably from 8 to 15, more preferably from 9 to 14, further preferably from 10 to 13. When the number of carbon atoms is within the above range, the boiling point of the saturated hydrocarbon compound of the present invention is within a preferred range.

The saturated hydrocarbon compound is one having a structure which will not destroy ozone layer and contains no halogen atom, in view of reduction of environmental burden.

The boiling point of the saturated hydrocarbon compound is from 40°C to 250°C, preferably from 80°C to 220°C, further preferably from 120°C to 200°C. When the boiling point is at least the lower limit of the above range, the solvent will hardly volatilize during storage of the initiator solution, and it is thereby little risk of explosion due to concentration of the organic peroxide. Further, when the boiling point is at most the upper limit of the above range, it is easy to separate the saturated hydrocarbon compound from the fluorinated polymer.

The melting point of the saturated hydrocarbon compound is from - 100°C to 0°C, preferably from -70°C to -10°C, further preferably from -50°C to - 20°C. When the melting point is within the above range, the initiator composition will not be solidified during storage at low temperature to suppress decomposition of the organic peroxide.

The saturated hydrocarbon compound may, for example, be 2,2-dimethylbutane (boiling point: 49.7°C, melting point: -99.9°C), 2,2,3-trimethylbutane (boiling point: 80.8°C, melting point: -25°C), 2-methylhexane (boiling point: 90°C, melting point: - 118°C), 2,3-dimethylhexane (boiling point: 115°C, melting point: 7°C), 2,2,4,4-tetramethylpentane (boiling point: 122.2°C, melting point: -66.5°C), 2,2,3,4,4-pentamethylpentane (boiling point: 159.3°C, melting point: -38.7°C), 2,2,5,5-tetramethylhexane (boiling point: 137.4°C, melting point: -12.6°C), 2,2,3,3,5,5-hexamethylhexane (boiling point: 187°C), 2,2,3,4,5,5-hexamethylhexane (boiling point: 170.3°C), 2,2,3,6,6-pentamethylheptane (boiling point: 172°C) or 2,2,4,6,6-pentamethylheptane (boiling point: 177.8°C, melting point: -67°C).

The saturated hydrocarbon compound is one in which the number of chained methylene groups is less than 3, preferably at least 1 and less than 3, further preferably at least 1 and less than 2.

If a linear hydrocarbon compound in which the number of chained methylene groups is 3 or more is used, the heat resistance of the obtainable polymer tends to decrease, and the obtainable polymer is likely to be colored at the time of completion of the polymerization reaction. This is considered to be due to introduction of a methylene chain at the polymer terminal. Whereas, when a branched hydrocarbon compound in which the number of chained methylene groups is less than 3 is used, the polymer will hardly be colored. The mechanism of action in detail is not clearly understood, however, it is considered that a branched hydrocarbon compound has low reactivity with monomer radicals even if it is formed into a radical structure having proton withdrawn during the polymerization reaction and is less likely to be introduced at the polymer terminal.

2,2,4,6,6-Pentamethylheptane has low chain transfer properties, has high chemical stability and is readily purified to high purity and is thereby preferred.

### (Organic peroxide)

The 10 hour half-life temperature of the organic peroxide used for the polymerization initiator composition is from 10°C to 150°C, preferably from 15°C to 120°C, further preferably from 20°C to 80°C. When the 10 hour half-life temperature is within the above range, the radical generation rate at a common polymerization reaction temperature is readily controlled. Further, it is possible to suppress decomposition of the organic peroxide to be within an allowable range without extremely lowering the temperature during storage.

The 10 hour half-life temperature is a temperature at which the concentration of the organic peroxide decreases by half 10 hours later in benzene at a concentration of 0.1 mol/liter, and is one of indices to thermal properties.

The organic peroxide used in the polymerization initiator composition used in the method of the present invention is one which can be used as a polymerization initiator of a vinyl monomer.

Such an organic peroxide may, for example, be a dialkyl peroxide compound such as di-t-butyl peroxide, t-butyl cumyl peroxide or dicumyl peroxide, a peroxyketal compound such as 1,1-bis(t-butylperoxy)-3,3,5-trimethylcyclohexane, 1,1-bis(t-butylperoxy)cyclohexane, 2,2-bis(4,4-di-t-butylperoxycyclohexyl)propane or 2,2-bis(t-butylperoxy)butane; a fluorinated diacyl peroxide such as isobutyryl peroxide, acetyl peroxide, 3,3,5-trimethylhexanoyl peroxide, lauroyl peroxide, benzoyl peroxide or (Z(CF₂)ₚCOO)₂ (wherein Z is a hydrogen atom, a fluorine atom or a chlorine atom, and p is an integer of from 1 to 10); a diacyl peroxide compound such as perfluoropropyl diacyl peroxide or perfluoro-t-butyl peroxide; a peroxydicarbonate compound such as din-propyl peroxydicarbonate, diisopropyl peroxydicarbonate, di-2-ethylhexyl peroxydicarbonate, di-2-ethoxyethyl peroxydicarbonate or di-methoxybutyl peroxydicarbonate; a peroxyester compound such as cumyl peroxyneodecanoate, 1,1,3,3-tetramethylbutyl peroxyneodecanoate, t-hexyl peroxyneodecanoate, t-amyl peroxyneodecanoate, t-butyl peroxyneodecanoate, t-butyl peroxyneooctanoate, t-butyl peroxyneohexanoate, t-butyl peroxypivalate, t-butyl-2-ethylhexanoate, t-butyl peroxyisobutyrate, t-butyl peroxylaurate, t-butyl peroxy-2-ethylhexanoate, t-butyl peroxybenzoate or t-butyl peroxyacetate; or a peroxymonocarbonate compound such as t-butyl peroxyisopropyl monocarbonate or t-butyl peroxyallyl monocarbonate.

Among them, a diacyl peroxide compound, a peroxydicarbonate compound or a peroxyester compound is preferred. Among such compounds, preferred is a fluorinated diacyl peroxide such as isobutyryl peroxide, acetyl peroxide, 3,3,5-trimethylhexanoyl peroxide, lauroyl peroxide, benzoyl peroxide or (Z(CF₂)ₚCOO)₂ (wherein Z is a hydrogen atom, a fluorine atom or a chlorine atom, and p is an integer of from 1 to 10); perfluoropropyl diacyl peroxide, perfluoro-t-butyl peroxide, di-n-propyl peroxydicarbonate, diisopropyl peroxydicarbonate, di-2-ethylhexyl peroxydicarbonate, di-2-ethoxyethyl peroxydicarbonate, di-methoxybutyl peroxydicarbonate or t-butyl peroxypivalate. In view of compatibility with the saturated hydrocarbon compound, t-butyl peroxypivalate or perfluoropropyl diacyl peroxide is more preferred, with which a uniform composition is readily prepared. t-Butyl peroxypivalate is more preferred in that the polymerization reaction quickly proceed.

### (Initiator composition for fluorinated polymer)

The initiator composition for a fluorinated polymer comprises an organic peroxide and a saturated hydrocarbon compound having at least one tertiary carbon atom or quaternary carbon atom. The content (concentration) of the organic peroxide based on the initiator composition being 100 mass% is preferably from 1 to 80 mass%. When the content is at most 80 mass%, the organic peroxide is diluted with the solvent, and explosive decomposition of the organic peroxide can be suppressed. Whereas, when it is at least 1 mass%, the polymer can be obtained without addition of excessive amount of the initiator composition. The content is more preferably from 2 to 75 mass%, further preferably from 3 to 70 mass%.

The content of the saturated hydrocarbon compound based on the initiator composition being 100 mass% is preferably from 20 to 99 mass%, more preferably from 25 to 98 mass%, further preferably from 30 to 97 mass%. When the content of the saturated hydrocarbon compound is within such a range, an initiator composition with high stability against foreign matters, friction, etc. can be obtained. Further, when the content of the saturated hydrocarbon compound is within the above range, the amount of the saturated hydrocarbon compound added together with the organic peroxide to a polymerization vessel is suppressed, and a high molecular weight polymer can readily be obtained. The saturated hydrocarbon compounds may be used alone or in combination of two or more.

The content of compounds other than the saturated hydrocarbon compound of the present invention based on the initiator composition being 100 mass% is preferably at most 10 mass%, more preferably at most 5 mass%, further preferably at most 1 mass%. In order to obtain a polymer having a sufficient molecular weight, it is preferred that no compound other than the saturated hydrocarbon compound of the present invention is contained.

The total content of the organic peroxide and the saturated hydrocarbon compound based on the initiator composition being 100 mass% is preferably at least 90 mass%, more preferably at least 95 mass%, further preferably at least 99 mass%.

The organic peroxide and the saturated hydrocarbon compound may arbitrarily be combined, and in view of favorable compatibility and with a view to obtaining a uniform initiator composition, preferred is a combination of t-butyl peroxypivalate, di-n-propyl peroxydicarbonate, diisopropyl peroxydicarbonate, di-2-ethylhexyl peroxydicarbonate, di-2-ethoxyethyl peroxydicarbonate, di-methoxybutyl peroxydicarbonate or perfluoropropyl diacyl peroxide and 2,2,4,6,6-pentamethylheptane, and more preferred is a combination of t-butyl peroxypivalate and 2,2,4,6,6-pentamethylheptane.

The present invention provides a method for producing a fluorinated polymer, which comprises radical-polymerizing one or more of fluorinated monomers by using the above initiator composition.

### (Fluorinated monomer)

The fluorinated monomer to be used for producing a fluorinated polymer in the present invention is not particularly limited so long as it has a fluorine atom. As such a fluorinated monomer, the following (1) to (7) may be mentioned.
(1) Tetrafluoroethylene (hereinafter referred to as "TFE"), chlorotrifluoroethylene.
(2) A compound represented by the formula (1) (hereinafter sometimes referred to as "FAE"):

   CH₂=CX(CF₂)ₙY formula (1)

   wherein X and Y are each independently a hydrogen atom or a fluorine atom, and n is an integer of from 2 to 8.
(3) A fluoroolefin having a hydrogen atom in a saturated group, such as vinylidene fluoride, vinyl fluoride, trifluoroethylene or hexafluoroisobutylene.
(4) A fluoroolefin having no hydrogen atom in a saturated group, such as hexafluoropropylene (excluding the compound (1)).
(5) A perfluoro(alkyl vinyl ether) such as perfluoro(methyl vinyl ether), perfluoro(ethyl vinyl ether), perfluoro(propyl vinyl ether) or perfluoro(butyl vinyl ether).
(6) A perfluorovinyl ether having two unsaturated bonds, such as CF₂=CFOCF₂CF=CF₂ or CF₂=CFO(CF₂)₂CF=CF₂.
(7) A fluorinated monomer having an alicyclic structure, such as perfluoro(2,2-dimethyl-1,3-dioxol), 2,2,4-trifluoro-5-trifluoromethoxy-1,3-dioxole or perfluoro(2-methylene-4-methyl-1,3-dioxolane).

Among the above (1) to (7), in view of excellent heat resistance, chemical resistance, weather resistance and non-tackiness of the obtainable polymer, (1) is preferred, and among (1), TFE is preferably used. Such fluorinated monomers may be used alone or in combination of two or more.

In view of excellent heat resistance, chemical resistance, weather resistance and non-tackiness of the obtainable polymer, as the fluorinated monomer, preferred is a combination of (1) and at least one of (2) to (7), more preferred is a combination of (1) and at least one of (2), (4) and (5), most preferred is a combination of (1), and (4) and (5). Specifically, a tetrafluoroethylene polymer, a vinylidene fluoride polymer, a chlorotrifluoroethylene polymer, a tetrafluoroethylene/hexafluoropropylene copolymer or a tetrafluoroethylene/perfluoro(alkyl vinyl ether) copolymer is preferred.

With respect to FAE as (2), if n in the formula (1) is less than 2, drawbacks such as cracking in the polymer may occur, and if n exceeds 8, the polymerizability may be insufficient, n is preferably from 2 to 6, and in view of excellent polymerizability with another fluorinated monomer also, more preferably from 2 to 4. At least one type of FAE may be used.

As FAE, specifically, CH₂=CF(CF₂)₂F, CH₂=CF(CF₂)₃F, CH₂=CF(CF₂)₄F, CH₂=CF(CF₂)₅F, CH₂=CF(CF₂)₈F, CH₂=CF(CF₂)₂H, CH₂=CF(CF₂)₃H, CH₂=CF(CF₂)₄H, CH₂=CF(CF₂)₅H, CH₂=CF(CF₂)₈H, CH₂=CH(CF₂)₂F, CH₂=CH(CF₂)₃F, CH₂=CH(CF₂)₄F, CH₂=CH(CF₂)sF, CH₂=CH(CF₂)₆F, CH₂=CH(CF₂)₈F, CH₂=CH(CF₂)₂H, CH₂=CH(CF₂)₃H, CH₂=CH(CF₂)₄H, CH₂=CH(CF₂)₅H and CH₂=CH(CF₂)₈H may, for example, be mentioned.

### (Other monomer)

The monomer component to be used for polymerization of a fluorinated polymer may contain a monomer other than the fluorinated monomer.

Such other monomer may, for example, be a polar functional group-containing monomer and in addition, an α-olefin such as ethylene, propylene or butene.

The polar functional group-containing monomer may, for example, be an alkyl vinyl ether such as ethyl vinyl ether, propyl vinyl ether, butyl vinyl ether, isobutyl vinyl ether or cyclohexyl vinyl ether; a vinyl ester such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl p-t-butyl benzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate or vinyl hydroxycyclohexanecarboxylate; an alkyl allyl ether such as ethyl allyl ether, propyl allyl ether, butyl allyl ether, isobutyl allyl ether or cyclohexyl allyl ether; an alkyl allyl ester such as ethyl allyl ester, propyl allyl ester, butyl allyl ester, isobutyl allyl ester or cyclohexyl allyl ester, a vinyl ether having a hydroxy group or an epoxy group, maleic acid, itaconic acid, citraconic acid, undecylenic acid or having a carboxy group, or maleic anhydride, itaconic anhydride, citraconic anhydride, himic anhydride or having an acid anhydride residue.

### (Fluorinated polymer)

The fluorinated polymer is specifically preferably a tetrafluoroethylene polymer, a vinylidene fluoride polymer, a chlorotrifluoroethylene polymer, a tetrafluoroethylene/hexafluoropropylene copolymer, a tetrafluoroethylene/perfluoro(alkyl vinyl ether) copolymer, an ethylene/tetrafluoroethylene copolymer or an ethylene/chlorotrifluoroethylene copolymer. The fluorinated polymer may contain structural units other than the main structural units. In view of excellent balance of heat resistance, chemical resistance and mechanical strength, preferred is an ethylene/tetrafluoroethylene copolymer or an ethylene/chlorotrifluoroethylene copolymer, more preferred is an ethylene/tetrafluoroethylene copolymer.

In an ethylene (hereinafter referred to as "E")/TFE copolymer (hereinafter referred to as "ETFE copolymer"), the molar ratio (EITFE ratio) of the structural units based on E to the structural units based on TFE is preferably from 80/20 to 20/80, more preferably from 70/30 to 30/70, further preferably from 50/50 to 35/65. The ETFE copolymer may contain structural units other than the structural units based on E and TFE.

In a case where the ETFE copolymer has structural units based on other monomer, the content of the structural units based on the monomer other than E and TFE is preferably from 0.01 to 20 mol%, more preferably from 0.1 to 10 mol%, further preferably from 0.8 to 5 mol% based on all the structural units. The melting point of the ETFE copolymer is preferably from 150 to 280°C, more preferably from 180 to 275°C, further preferably from 240 to 265°C.

The volume flow rate (hereinafter referred to as "Q value") of the ETFE copolymer is preferably from 0.1 to 200 mm³/sec, more preferably from 1 to 100 mm³/sec, further preferably from 5 to 50 mm³/sec. The Q value is an index to the melt flowability of a fluorinated polymer and is an index to the molecular weight. A higher Q value indicates a low molecular weight, and a lower Q value indicates a higher molecular weight.

### (Polymerization method and polymerization conditions)

Polymerization for a fluorinated polymer may be carried out by a conventional polymerization method such as solution polymerization, suspension polymerization, bulk polymerization or emulsion polymerization. Solution polymerization or suspension polymerization by which the composition and the molecular weight distribution can readily be controlled is preferred. Polymerization in the present invention may be carried out by any of batch type, and continuous type. The polymerization temperature is preferably from 0 to 100°C, more preferably from 20 to 90°C. The polymerization pressure is preferably from 0.1 to 10 MPa, more preferably from 0.5 to 3 MPa. The polymerization time is preferably from 1 to 30 hours, more preferably from 2 to 20 hours. When the polymerization temperature, the pressure and the polymerization time are within the above ranges, no special equipment is necessary, and production with high productivity is possible, and such is preferred in view of economical efficiency also.

### (Initiator)

The amount of the organic peroxide as the polymerization initiator used from 0.05 to 0.5 wt% based on all the monomers to be polymerized. The amount of the initiator composition to be added is properly adjusted so that the amount of the organic peroxide used will be within the above range depending upon the content of the organic peroxide. (Chain transfer agent)

A chain transfer agent may be added for the purpose of adjusting the molecular weight of the obtainable fluorinated polymer. The chain transfer agent may, for example, be an alcohol such as methanol, ethanol, 2,2,2-trifluoroethanol, 2,2,3,3-tetrafluoropropanol, 1,1,1,3,3,3-hexafluoroisopropanol or 2,2,3,3,3-pentafluoropropanol, a hydrocarbon such as n-pentane, n-hexane, cyclopentane or cyclohexane, a hydrofluorocarbon such as CH₂F₂, a ketone such as acetone, a mercaptan such as methyl mercaptan, an ester such as methyl acetate or ethyl acetate, or an ether such as diethyl ether or methyl ethyl ether. It may be added in an appropriate amount depending upon the molecular weight of the desired fluorinated polymer but may not be used. If used, it is used usually in an amount of from 0.01 to 20 wt% based on the polymerization solvent.

### (Polymerization solvent)

The polymerization solvent in which solution polymerization or suspension polymerization is conducted may be a perfluorocarbon, a hydrofluorocarbon or a hydrofluoroether.

The perfluorocarbon may, for example, be n-perfluorohexane, n-perfluoroheptane, perfluorocyclobutane, perfluorocyclohexane or perfluorobenzene.

The hydrofluorocarbon may, for example, be 1,1,2,2-tetrafluorocyclobutane, CF₃CF₂CH₂CH₃, CF₃CHF(CF₂)₃F, CF₃(CF₂)₄H, CF₃CF₂CHF(CF₂)₂F, CF₃(CHF)₂(CF₂)₂F, CHF₂CHF(CF₂)₃F, CF₃(CF₂)₅H, CF₃CH(CF₃)(CF₂)₃F, CF₃CF(CF₃)CHF(CF₂)₂F, CF₃CF(CF₃)(CHF)₂CF₃, CF₃CH(CF₃)CHF(CF₂)₂F or CF₃(CF₂)₃(CH₂)₂H.

The hydrofluoroether may be a compound represented by the following formula (2) (hereinafter referred to as "compound (2)").

CₘH₂ₘ₊₁₋ₓFₓ-O-CₙH_{2n+1-y}F_{y} (2)

wherein m is an integer of from 1 to 6, n is an integer of from 1 to 6, x is from 0 to (2m+1), y is from 0 to 2n, and (x+y) is at least 1.

In the compound (2), "CₘH₂ₘ₊₁₋ₓFₓ" and "CₙH_{2n+1-y}F_{y}" may be linear or branched. The total number of carbon atoms in "CₘH₂ₘ₊₁₋ₓFₓ" and "CₙH₂ₙ+_{1-y}F_{y}" is preferably from 3 to 8, more preferably from 4 to 6. If the total number is smaller than the above lower limit value, the boiling point is too low, and the compound is difficult to handle. On the other hand, if the total number is larger than the above upper limit value, the boiling point is too high, and the compound is hardly separated from the polymer.

The total number of fluorine atoms in "CₘH₂ₘ₊₁₋ₓFₓ" and "CₙH_{2n+1-y}F_{y}" is preferably at least 60% based on the total number of hydrogen atoms and fluorine atoms. A large amount of fluorine atoms is preferred since the chain transfer constant becomes small, however, if it is too large, the global warming potential may be high. Further, if the amount of hydrogen atoms is too large, the chain transfer constant may be large.

Further, since fluorine atoms and hydrogen atoms coexist, the chain transfer constant will be further smaller, it is preferred that both "CₘH₂ₘ₊₁₋ₓFₓ" and "CₙH_{2n+1-y}F_{y}" contain fluorine atoms and hydrogen atoms, that is, x is at least 1 and y is at least 1. However, in a case where m is 1 or 2, the chain transfer constant is sufficiently small even if x is 0.

As specific compound (2), CF₃CH₂O(CF₂)₂H, CHF₂CF₂CH₂O(CF₂)₂H, CH₃O(CF₂)₄H, CH₃OCF₂CF(CF₃)₂ and CF₃CHFCF₂OCF₃ may, for example, be mentioned. Among them, CF₃CH₂O(CF₂)₂H is preferred in that the chain transfer constant is sufficiently small and the compound does not function as a chain transfer agent, the boiling point is sufficiently higher than room temperature and is at most 100°C and thus the compound is easily handled, and the slurry of the ETFE copolymer can be granulated while the polymerization solvent is recovered by evaporation.

### (Step of recovering polymerization solvent)

In the method for producing a fluorinated polymer, after completion of the polymerization reaction, an unreacted monomer, the polymerization solvent and the chain transfer agent can be recovered and reused. The recovery method is not particularly limited and may, for example, be a method wherein the reaction liquid after completion of the reaction is heated with stirring, to evaporate an unreacted monomer, the polymerization solvent and the chain transfer agent to separate them from the fluorinated polymer. The evaporated unreacted monomer, polymerization solvent and chain transfer agent may be recovered as gases in a gas holder, or may be cooled and condensed and recovered in a liquid holder. Otherwise, it is also preferred to pour water to the reaction liquid, followed by stirring, thereby to granulate the fluorinated polymer and separate the granules, and then carry out recovery operation.

### (Step of separating saturated hydrocarbon compound from recovered polymerization solvent)

In the method for producing a fluorinated polymer, in a case where the saturated hydrocarbon compound is contained in e.g. the recovered polymerization solvent, the saturated hydrocarbon compound may be separated from the polymerization solvent or the like recovered e.g. by adsorption or distillation.

To separate the saturated hydrocarbon compound from the polymerization solvent or the like by adsorption, a method of using as an adsorbent activated carbon, silica, silica gel, zeolite, activated alumina may be mentioned. The adsorbent is preferably activated carbon, in which the saturated hydrocarbon compound is readily adsorbed and which is available at a low cost.

In a case where the saturated hydrocarbon compound is separated from the polymerization solvent by distillation, the distillation method is not particularly limited but is preferably a method in which the saturated hydrocarbon compound does not undergo azeotropy with the polymerization solvent.

For example, CF₃(CF₂)₅H (hereinafter referred to as "C6H") and 2,2,4,6,6-pentamethylheptane do not undergo azeotropy and can be separated from each other by distillation.

In an operation to recover the polymerization solvent and to separate the saturated hydrocarbon compound, a very small amount of the saturated hydrocarbon compound may remain as a residue in the polymerization solvent or the like. By repeatedly carrying out the recovery operation, such a residue is concentrated. Since the saturated hydrocarbon compound used for the initiator composition of the present invention has low chain transfer properties and has little influence over polymerization even if concentrated in the polymerization solvent as the residue, and is thereby suitable also in a production process comprising a step of recovering the polymerization solvent.

### EXAMPLES

Now, the present invention will be described in further detail with reference to Examples of the present invention (Preparation Example 1 and Ex. 1 to 3), Comparative Examples (Preparation Example 2 and Ex. 4) and Reference Example (Reference Example 1).

The volume flow rate, the melting point and the polymer composition were measured by the following methods.

### (Volume flow rate: Q value (mm³/sec))

It is represented by an extrusion rate when an ETFE copolymer was extruded from an orifice having a diameter of 2.1 mm and a length of 8 mm at a temperature higher by 50°C than the melting point of the ETFE copolymer under a load of 7 kg weight, using a flow tester manufactured by SHIMADZU CORPORATION (CFT-100D, furnace inside diameter: 10 mm). In Examples, the measurement temperature was 297°C.

### (Melting point)

Using a scanning differential thermal analyzer (manufactured by SII Nanotechnology Inc., DSC7200), in the air atmosphere, 5 mg of a copolymer was heated to 300°C at 10°C/min and held for 5 minutes, then cooled to 150°C at 10°C/min and held for 5 minutes, and heated again to 300°C at 10°C/min, and the temperature at the endothermic peak by melting was taken as the melting point (°C).

### (Polymer composition)

It was measured by infrared spectrometry.

### [Preparation Example 1]

By the method disclosed in Ex. 1 in Japanese Patent No. 4835050 except that 2,2,4,6,6-pentamethylheptane was used instead of C6H, a t-butyl peroxypivalate solution was obtained from pivaloyl chloride and an aqueous t-butyl hydroperoxide solution. The content of t-butyl peroxypivalate in the obtained solution was 82 mass%. 2,2,4,6,6-pentamethylheptane was added so that the content of t-butyl peroxypivalate would be 2.7 mass% (Preparation Example 1-1), 7.6 mass% (Preparation Example 1-2) or 62 mass% (Preparation Example 1-3) to prepare initiator compositions.

### [Preparation Example 2]

t-Butyl peroxypivalate was prepared in the same manner as in Preparation Example 1 except that n-dodecane was used instead of 2,2,4,6,6-pentamethylheptane. n-Dodecane was added so that the content of t-butyl peroxypivalate would be 36 mass% to prepare an initiator composition.

### [Ex. 1]

A stainless steel polymerization vessel having an internal capacity of 1.3 L equipped with a jacket was evacuated of air, and 1,325 g of C6H, 13.7 g of methanol and 6.0 g of CH₂=CH(CF₂)₄F (hereinafter referred to as "PFBE") were supplied. Then, the interior of the polymerization vessel was heated to 66°C while the solution was stirred. Then, a mixed gas of ElTFE=14/86 (molar ratio) was supplied into the polymerization vessel to adjust the internal pressure (gauge pressure) to be 1.5 MPaG, and 4.15 g of the initiator composition prepared in Preparation Example 1-1 was supplied to start the polymerization reaction.

During the polymerization reaction, a mixed gas of E/TFE=46/54 (molar ratio) was continuously supplied to keep the internal pressure (gauge pressure) to be 1.5 MPaG and at the same time, PFBE in an amount corresponding to 1.4 mol% of the mixed gas was continuously supplied. 167 Minutes after the start of the polymerization, at a point when 84 g of the mixed gas was charged, supply of the gas was terminated, the polymerization vessel was cooled and an unreacted monomer gas was purged to obtain a slurry of a copolymer.

The obtained slurry was put in a granulation vessel having an internal capacity of 2 L, and water in the same volume as the slurry was added, and the solvent was recovered under 0.2 MPaG while heating at 98°C to obtain granules of the copolymer. The recovered solvent was analyzed by gas chromatography, whereupon 90% of 2,2,4,6,6-pentamethylheptane added for the polymerization was recovered in the solvent. 1,000 g of the recovered solvent and 100 g of activated carbon were mixed and stirred at room temperature for 12 hours to conduct adsorption treatment, whereupon the concentration of 2,2,4,6,6-pentamethylheptane contained in the recovered solvent was reduced to be less than 50 ppm.

The granules of the copolymer were dried in the air atmosphere in an oven at 150°C for 15 hours to obtain a white copolymer (hereinafter referred to as "ETFE 1"). Of ETFE 1, the Q value was 39 mm³/sec, the melting point was 261°C, and the composition was E/TFE/PFBE = 45.2/53.5/1.3 (mol%).

### [Ex. 2]

Polymerization was carried out in the same manner as in Ex. 1 except that 1.46 g of the polymerization initiator composition prepared in Preparation Example 1-2 was used, and the reaction was completed in a polymerization time of 178 minutes to obtain ETFE 2. ETFE 2 was white, and the Q value was 40 mm³/sec, the melting point was 260°C, and the composition was E/TFE/PFBE = 45.2/53.4/1.4 (mol%).

### [Ex. 3]

Polymerization was carried out in the same manner as in Ex. 1 except that 0.18 g of the polymerization initiator composition prepared in Preparation Example 1-3 was used, and the reaction was completed in a polymerization time of 174 minutes to obtain ETFE 3. ETFE 3 was white, and the Q value was 37 mm³/sec, the melting point was 261°C, and the composition was E/TFE/PFBE = 45.3/53.4/1.3 (mol%).

### [Ex. 4]

Polymerization was carried out in the same manner as in Ex. 1 except that 0.313 g of the polymerization initiator composition prepared in Preparation Example 2 was used, and the reaction was completed in a polymerization time of 171 minutes to obtain ETFE 4. ETFE 4 was colored slightly brown, and the Q value was 60 mm³/sec, the melting point was 260°C, and the composition was E/TFE/PFBE = 45.2/53.4/1.4 (mol%).

### [Reference Example 1]

Polymerization was carried out in the same manner as in Ex. 1 except that as the polymerization initiator, 22.2 g of a solution obtained by diluting a mixed solution of t-butyl peroxypivalate and AK-225cb (manufactured by Asahi Glass Company, Limited, 1,3-dichloro-1,1,2,2,3-pentafluoropropane) in a mass ratio of 1:1 with C6H to 1 mass%, was used, and the reaction was completed in a polymerization time of 170 minutes to obtain ETFE 5. Of ETFE 5, the Q value was 40 mm³/sec, the melting point was 260°C, and the composition was E/TFE/PFBE = 45.2/53.4/1.4 (mol%).

As shown in Ex. 1 to 3, when the initiator compositions prepared in Preparation Example 1 (Preparation Examples 1-1, 1-2 and 1-3) were used, the Q values of the obtained polymers were at most 50 mm³/sec. These Q values are at the same level as that of Reference Example in which the initiator composition was prepared by using a fluorinated solvent which has no influence over chain transfer, and it is found that a sufficient molecular weight is obtained. Whereas in Ex 4 in which a saturated hydrocarbon compound not having a structure of the present invention was used, the Q value exceeded 50 mm³/sec, and the molecular weight was low as compared with Ex. 1 to 3, and thus it is found that chain transfer occurred by n-dodecane in Ex. 4. Further, in Ex. 4, coloring was confirmed on the dried polymer, indicating that n-dodecane was incorporated in the copolymer terminal, whereby the heat resistance decreased. Further, Ex. 1 shows a production method in which a fluorinated copolymer is obtained by polymerization using the initiator composition of the present invention, and then the saturated hydrocarbon compound is separated from the recovered polymerization solvent.

### INDUSTRIAL APPLICABILITY

The initiator composition of the present invention is useful as a polymerization initiator for a fluorinated polymer. Further, the present invention also provides a useful method for producing a fluorinated polymer using the initiator composition.

## Claims

1. A method for producing a fluorinated polymer by using an initiator composition for a fluorinated polymer:
wherein the initiator composition for a fluorinated polymer comprises an organic peroxide, and a saturated hydrocarbon compound having at least one tertiary carbon atom or quaternary carbon atom,
wherein the saturated hydrocarbon compound has from 6 to 15 carbon atoms,
wherein the number of chained methylene groups in the saturated hydrocarbon compound is less than 3,
wherein the saturated hydrocarbon compound has a boiling point of from 40 to 250°C,
wherein the saturated hydrocarbon compound has a melting point of from -100 to 0°C,
wherein the saturated hydrocarbon compound contains no halogen atom,
wherein the 10 hour half-life temperature of the organic peroxide is from 10 to 150°C, and
wherein the used amount of the organic peroxide is from 0.05 to 0.5 wt% based on all monomers to be polymerized for producing a fluorinated polymer.

2. The method for producing a fluorinated polymer according to Claim 1, wherein the fluorinated polymer is an ethylene/tetrafluoroethylene copolymer.

3. The method for producing a fluorinated polymer according to Claim 1 or 2, wherein the saturated hydrocarbon compound is 2,2,4,6,6-pentamethylheptane.

4. The method for producing a fluorinated polymer according to any one of Claims 1 to 3, wherein the organic peroxide is t-butyl peroxypivalate.

5. The method for producing a fluorinated polymer according to any one of Claims 1 to 4, wherein polymerization for the fluorinated polymer is solution polymerization or suspension polymerization.

6. The method for producing a fluorinated polymer according to any one of Claims 1 to 5, which comprises a step of recovering a polymerization solvent and a step of separating the saturated hydrocarbon compound from the recovered polymerization solvent.

## Patentansprüche

1. Verfahren zur Herstellung eines fluorierten Polymers unter Verwendung einer Initiatorzusammensetzung für ein fluoriertes Polymer:
wobei die Initiatorzusammensetzung für ein fluoriertes Polymer ein organisches Peroxid und eine gesättigte Kohlenwasserstoffverbindung mit mindestens einem tertiären Kohlenstoffatom oder quartären Kohlenstoffatom umfasst,
wobei die gesättigte Kohlenwasserstoffverbindung 6 bis 15 Kohlenstoffatome aufweist,
wobei die Anzahl der verketteten Methylengruppen in der gesättigten Kohlenwasserstoffverbindung weniger als 3 beträgt,
wobei die gesättigte Kohlenwasserstoffverbindung einen Siedepunkt von 40 bis 250°C aufweist,
wobei die gesättigte Kohlenwasserstoffverbindung einen Schmelzpunkt von -100 bis 0°C aufweist,
wobei die gesättigte Kohlenwasserstoffverbindung kein Halogenatom enthält,
wobei die 10-Stunden-Halbwertszeittemperatur des organischen Peroxids 10 bis 150 °C beträgt, und
wobei die verwendete Menge des organischen Peroxids 0,05 bis 0,5 Gew.-%, bezogen auf alle zur Herstellung eines fluorierten Polymers zu polymerisierenden Monomere, beträgt.

2. Verfahren zur Herstellung eines fluorierten Polymers nach Anspruch 1, wobei das fluorierte Polymer ein Ethylen/Tetrafluorethylen-Copolymer ist.

3. Verfahren zur Herstellung eines fluorierten Polymers nach Anspruch 1 oder 2, wobei die gesättigte Kohlenwasserstoffverbindung 2,2,4,6,6-Pentamethylheptan ist.

4. Verfahren zur Herstellung eines fluorierten Polymers nach einem der Ansprüche 1 bis 3, wobei das organische Peroxid t-Butylperoxypivalat ist.

5. Verfahren zur Herstellung eines fluorierten Polymers nach einem der Ansprüche 1 bis 4, wobei die Polymerisation für das fluorierte Polymer eine Lösungspolymerisation oder Suspensionspolymerisation ist.

6. Verfahren zur Herstellung eines fluorierten Polymers nach einem der Ansprüche 1 bis 5, welches einen Schritt der Rückgewinnung eines Polymerisationslösungsmittels und einen Schritt der Abtrennung der gesättigten Kohlenwasserstoffverbindung aus dem rückgewonnenen Polymerisationslösungsmittel umfasst.

## Revendications

1. Procédé de production d'un polymère fluoré en utilisant une composition d'initiateur pour un polymère fluoré :
dans lequel la composition d'initiateur pour un polymère fluoré comprend un peroxyde organique, et un composé d'hydrocarbure saturé ayant au moins un atome de carbone tertiaire ou atome de carbone quaternaire,
dans lequel le composé d'hydrocarbure saturé a de 6 à 15 atomes de carbone,
dans lequel le nombre de groupes méthylène enchaînés dans le composé d'hydrocarbure saturé est inférieur à 3,
dans lequel le composé d'hydrocarbure saturé a un point d'ébullition allant de 40 à 250 °C,
dans lequel le composé d'hydrocarbure saturé a un point de fusion allant de -100 à 0 °C,
dans lequel le composé d'hydrocarbure saturé ne contient aucun atome d'halogène,
dans lequel la température de demi-vie à 10 heures du peroxyde organique va de 10 à 150 °C, et
dans lequel la quantité utilisée du peroxyde organique va de 0,05 à 0,5 % en poids basée sur l'ensemble des monomères devant être polymérisés pour produire un polymère fluoré.

2. Procédé de production d'un polymère fluoré selon la revendication 1, dans lequel le polymère fluoré est un copolymère d'éthylène/tétrafluoroéthylène.

3. Procédé de production d'un polymère fluoré selon la revendication 1 ou 2, dans lequel le composé d'hydrocarbure saturé est le 2,2,4,6,6-pentaméthylheptane.

4. Procédé de production d'un polymère fluoré selon l'une quelconque des revendications 1 à 3, dans lequel le peroxyde organique est le peroxypivalate de t-butyle.

5. Procédé de production d'un polymère fluoré selon l'une quelconque des revendications 1 à 4, dans lequel la polymérisation pour le polymère fluoré est une polymérisation en solution ou polymérisation en suspension.

6. Procédé de production d'un polymère fluoré selon l'une quelconque des revendications 1 à 5, qui comprend une étape de récupération d'un solvant de polymérisation et une étape de séparation du composé d'hydrocarbure saturé du solvant de polymérisation récupéré.
